# EUROPEAN PATENT APPLICATION

(11) **EP 1 494 177 A2**
(43) Date of publication of application: **05.01.2005**
(21) Application number: 04253752.2
(22) Date of filing: 23.06.2004
(51) Int. Cl.: G07C 9/00, G06F 17/60

(54) **Data management system and method**

(30) Priority: 27.06.2003 GB 0315120
(71) Applicant: Esselte, 9100 St. Niklaas (BE)
(72) Inventor: Vandorpe, Benjamin, 8510 Marke (BE)
(74) Representative: Driver, Virginia Rozanne

(57) **Abstract**

A data management system comprising: a database; a user interface located remote from the database, arranged to receive user-input data as a series of items and transfer the items to the database for storage; connection means over which user-input data can be transferred from the user interface to the database; and a charging module arranged to generate an invoice identifying a charge for storage of user-input data in the database including a portion based on the usage of the database.

## Description

The present invention relates to a data management system, a method of handling data and a computer program product.

There are known data management systems that are particularly useful for monitoring visitors to a company site. There is generally provided some sort of user interface on a computer which is designed to request information required to identify the user and monitor the user whilst on site. For example, the user interface may be set up to request the user's name and the name of the person the user is visiting. The time of arrival and, subsequently, the time of departure from the site is also monitored.

The user interface is connected to a database which stores the input information. Thus should there be a need to ascertain how many visitors are on the site and who they are with, the database can be accessed to obtain this information. There is commonly provided some sort of processor and server for controlling operation of the database. One reason why such a system is useful is that in the event of a fire or other emergency, the number and identity of visitors can be quickly determined so that all visitors can be accounted for.

It is usual for the above-described system to print out some sort of badge or label using the input information. The label is designed to be worn by the visitor while they are on the site. Such a system improves security of the site since company employees can challenge anyone who is unknown to them and who does not have a label.

One problem with the above-described system is that the data is only accessible from the on-site database. Thus if the database is damaged in a fire or other disaster or is otherwise inaccessible the data is not retrievable. In this situation it is no longer possible to accurately account for all the visitors and if any are lost or trapped emergency services can not be accurately informed as to exactly who should be searched for.

Another problem with the system is that if the owner of the system wishes to run a similar system on another site, a whole system including the user interface and database must be installed on the other site. This is expensive for a company which has several sites. Furthermore, if the system is to be sold to another company, the entire system including a suitable processor/server must be installed, and, since the system is then out of the owner's control, an after-sales support service will likely be required. Such installation is expensive and the owner may not have the resources to provide an after-sales service.

A system which overcomes some of the above-mentioned problems is run by Advantor. Details of their "iVisitor" system can be found at the website address http://www.infrasafe.com. This system provides an on-line visitor management service which enables customers to monitor visitors at their site. Only minimal software needs to be installed at the customer's site since data management is carried out by the system provider. The system enables customers to keep an accurate record of visitors to their site.

Although the above-mentioned system confers monthly registration fees on customers, there is not provided any way of generating bills for customers nor of taking account of usage of the system when charging.It would be desirable to provide a system and a method which enables these features.

According to an aspect of the present invention there is provided a data management system comprising: a database; a user interface located remote from the database, arranged to receive user-input data as a series of items and transfer the items to the database for storage; connection means over which user-input data can be transferred from the user interface to the database; and a charging module arranged to generate an invoice identifying a charge for storage of user-input data in the database including a portion based on the usage of the database.

According to another aspect of the present invention there is provided a method of handling data comprising the steps of: receiving user-input data as a series of items at a first location; transferring the items for storage at a second location remote from the first location; generating an invoice identifying a charge for storage of user-input data at the second location, said charge including a portion based on the usage of a storage facility at the second location.

The invention also provides a computer program product comprising program code means implementing the aforesaid method when loaded into a computer.

The invention will now be described, by way of example only, with reference to the accompanying drawings in which :
Figure 1 shows a system;
Figure 2 shows a screen of a user-interface; and
Figure 3 shows a human-readable view of a database.

In the figures like reference numerals indicate like parts.

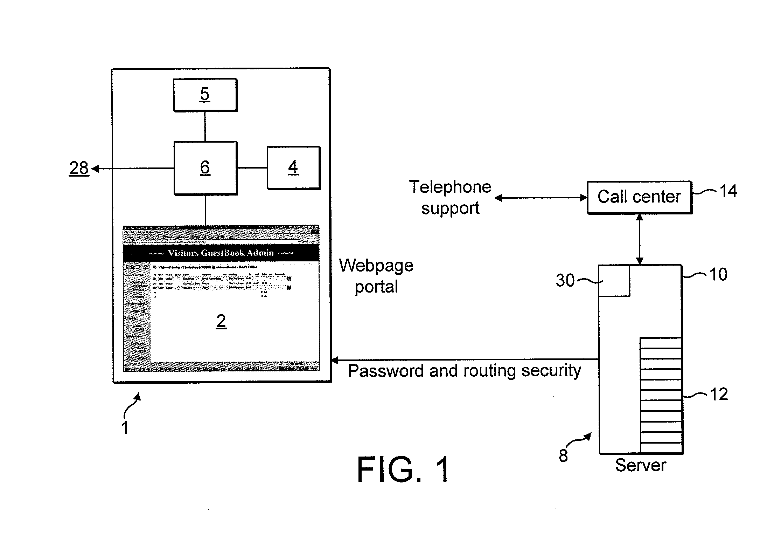

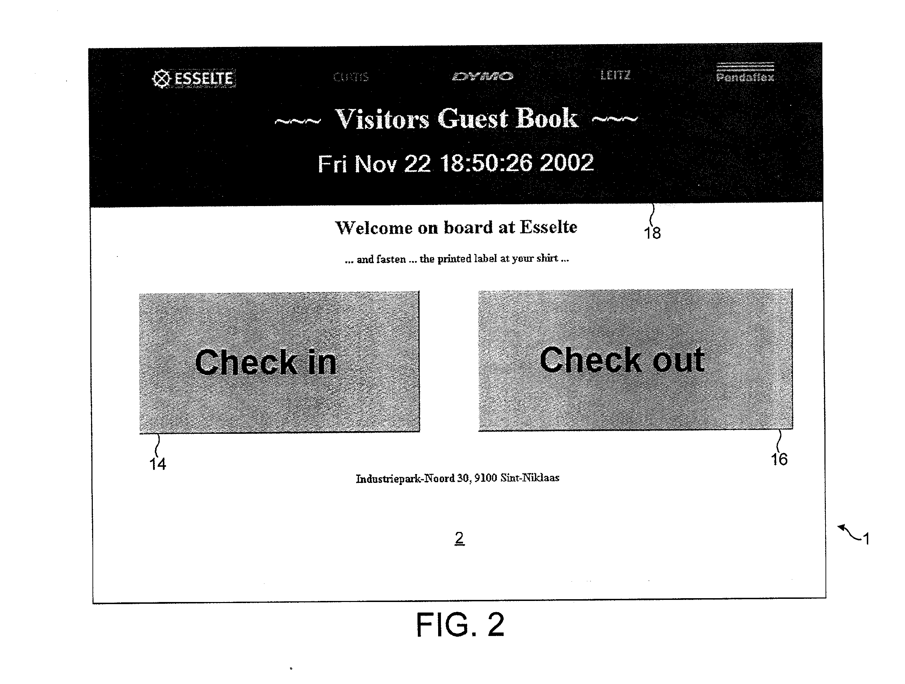

Referring to figures 1 and 2, a user interface of an embodiment of the invention, indicated generally by reference numeral 1, is shown. The interface 1 is located in a user company site and comprises a screen 2, a keyboard 4, a printer 5 and a processor 6 providing control of and connection between the screen 2, the keyboard 4 and the printer 5. The processor is only a small processor for controlling operation of the user interface 1 since the substantive data handling is carried out off-site, as will be explained below.

The interface 1 is connected to a server 8 over the internet. The server 8 comprises a processor 10 operable to run a database 12 and to communicate with the interface 1. The server 8 further comprises a charging module 30 also operable under the control of the processor 10. Communication between the server 8 and the interface 1 is achieved specifically by communication between the processor 10 and the processor 6, but this connection is shown schematically in figure 2.

The server 8 is further shown to be connected to a call centre 14 to provide telephone setup and support to the company in whose site the interface 1 is located. The server is located on the site of an owner company, which is different from the user company on whose site the interface 1 is located. The call centre can either be located within the owner company site or at a different location.

In use, pressing of keys on the keyboard 4 and use of the buttons on the associated mouse inputs data into the user interface 1. Input data is then transferred to the server 8 for storage and subsequent retrieval. These mechanisms will now be explained in more detail.

The first procedure for the user company on whose site the interface 1 is connected is to switch on the interface 1 and set it in communication with the server 8. This must be done every time the interface 1 is switched on or started up. The interface 1 is set up such that when it is switched on, it asks for a user identity and password to be entered. An employee of the user company enters this information and the processor 6 transfers it over a secure internet connection to the server 8. The processor 10 verifies the authenticity of the user name and password and the routing of the connection, and, if authentic and authorised, enables the connection between the user interface 1 and the server 8 for use as described below.

Having successfully enabled the connection, the processor 6 displays a view on the screen 2 as shown in figure 2. It can be seen in figure 2 that the interface 1 thus invites a user either to "check in" or "check out", by respective icons 14 and 16. The check in is for when a visitor arrives on the site and the check out is for when a visitor leaves the site. The display 2 also shows other desirable information such as the header 18, which indicates information such as the date and time, the name of the company on whose site the interface 1 is located and other information for welcoming visitors.

In order to check in, a visitor selects the icon 14. The interface 1 then invites the visitor to enter various data, such as the visitor's name, the company which the visitor is from, and the employee of the user company that is being visited. Visitors may optionally be asked to enter other data such as their car registration and if they are part of a group of visitors, or other relevant information. The visitor can either be asked to enter this data sequentially or a series of "blanks" to be filled in can be displayed on the screen 2.

The date and time at which the data is entered and hence the time at which the visitor arrived on the site is monitored automatically, and is available for display on the header 18. This is achieved by a clock system in the processor 6.

Data entered by a visitor and the time and date information is transferred by the processor 6 of the user interface 1 to the server 8, over the connection means, as shown schematically in figure 1. The data is stored by the processor 10 in the database 12 as a series of items. Each item contains the input information on a visitor and the associated time and date information. These items are stored in an administration area of the database 12.

The processor 10 also allocates a user ID and a label number to each visitor, and this information is stored together with the other data for each visitor.

The other action of the processor 6 of the interface 1 each time data of a visitor is entered, is to cause printing of some or all of the data at the printer 5. The printer 5 is configured to print information in the format of a label or badge that can be worn by the visitor. The label can either be stuck directly onto the visitor's clothes or stuck in a removable fashion on a badge such as a plastic badge. Certain styles of badge do not require the label to have an adhesive backing but instead provide a slot into which the printed label can be inserted.

The label can show some or all of the information entered at the interface 1. For example, it may show just the label number, visitor name and the name of the employee being visited. The label could of course show all the entered data if desired.

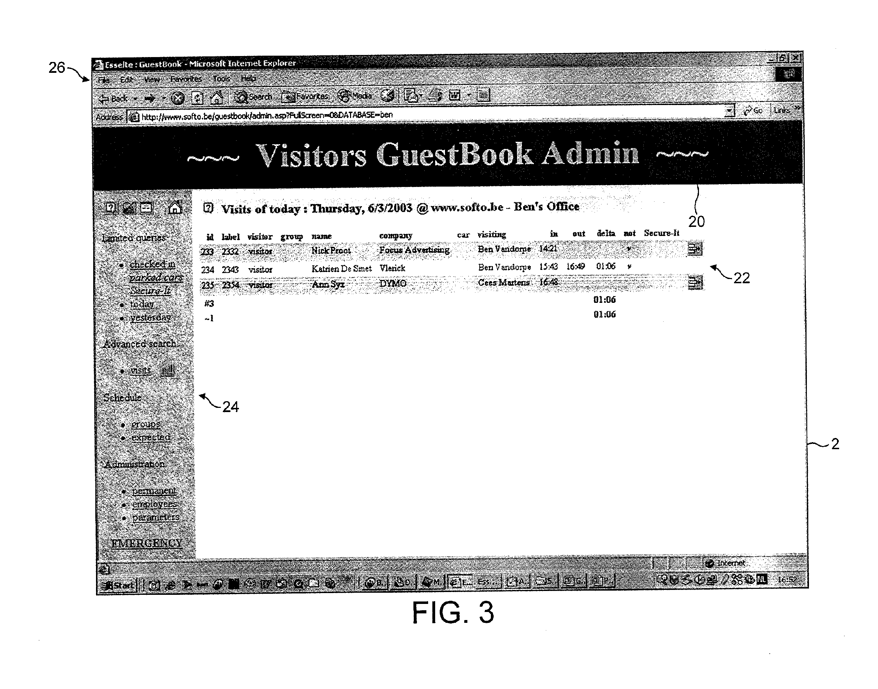

Once a visitor is provided with a label, employees of the user company can easily tell that that unfamiliar person has been registered at the interface 1, and know to challenge any unfamiliar people without labels. Furthermore, an electronic record of all visitors on site has been created. Thus in the event of a fire or other emergency, or for any other reason, the list of visitors can be accessed from the database 12 so that all visitors can be properly accounted for. This is achieved by appropriate use of the keyboard 4 and mouse to call up the administration screen shown in figure 3. This screen has a header 20 that indicates that the screen is for administrative use rather than for registering visitors. Below the header 20 is shown a list 22 of registered visitors.

In each item of the list is shown a user ID, a label number, the nature of the visitor (e.g. visitor or contractor), whether the visitor is with a group, the visitor name, the visitor's origin (e.g. company name, personal visitor), their car registration, the name of the employee being visited, and the time in. The information could of course be shown in a different order and/or format as desired.

The screen of figure 3 may show other items such as search options. Examples of these are shown at the left hand side of the screen in the region labelled 24. For example, there is shown an option to retrieve the visitor data from a previous day, and the option to search for a vehicle registration to ascertain which visitor it belongs to. If desired, the interface 1 can be connected to other systems within the user company and these could be accessible from options in the screen of figure 3.

If the nature of the emergency means that the user interface 1 is unavailable for use, the data shown in figure 3 is stored in the database 12 in such a manner that it can nevertheless be retrieved from elsewhere. In particular, it is possible to retrieve the data from off-site over the internet. This possibility is illustrated in figure 3, which shows that the screen has been arrived at over the internet (see the bar 26 at the top of the screen 2). One possibility is for the data to be retrieved by the owner company in response to a request put into the call centre 14 by telephone by an employee of the user company. Such a call could be made at a safe distance from the site in which the interface 1 is connected, and an operator at the call centre 14 would then access the data over the connection shown in figure 2 between the call centre 14 and the server 8. In this way, all visitors to the site can be accounted for.

Alternatively and/or additionally, the stored information can be accessed from another terminal remote from the server 8 using the appropriate user ID and password, if the request originates from a terminal which is using the usual routing server 8.

Thus since data on visitors to the site is held off-site, the data is not lost in the event of an emergency on the site.

Referring back to figure 1, when a visitor leaves the site, the visitor uses the check out procedure by selecting the icon 16. For the check out procedure, the visitor is requested to enter one piece of data such as their name or their label number, and thus the processor 6 automatically logs the time at which the visitor left the site. The processor 6 further transfers this information to the processor 10 of the server 8, which stores a suitable indication, most conveniently the time at which the visitor logged out. In this embodiment the data for logged out visitors is removed from the administration area of the database 12 and stored in a different part of the database 12 as an information log. The information regarding logged-out visitors is also therefore removed from the administration screen 3.

Thus if the information shown in figure 3 is requested after a visitor has logged out, this visitor does not appear in the list of on-site visitors. However, since information on logged-out visitors is stored in a different part of the database 12, this information can be retrieved if it is desired to obtain a historical record of visitors. In this case, the time out would be shown, as can be seen in the example of figure 3. Current and historical information can be displayed together, as is the case in figure 3. The user company on whose site the interface 1 is located and the owner company can agree for how long visitor data will be stored.

Another feature of the system is that the processor 6 of the interface 1 is further arranged to transmit messages out of the interface 1, as shown by the arrow 28. In particular, the processor 6 can transmit messages to other locations within the user company, for example over a company intranet. One particularly useful feature is that each time a visitor logs in, an e-mail message is automatically sent to the company employee being visited. Thus the employee is notified that his or her visitor has arrived and can be collected. This is more efficient than, for example, a receptionist making a special telephone call to the employee. Some or all of the information input into the interface 1 can be included in the message.

The system is particularly advantageous in that it is configured for the owner company to charge the user company. In this embodiment the processor 10 contains a charging module 30, which calculates a charge based on a set-up fee, a maintenance fee and a usage fee, the usage fee being based on the amount of use of the system by the user company. The set-up fee is a one-off amount that covers the cost of installing the system at the user company and explaining to them its operation and the procedure for contacting the call centre 14. The maintenance fee is a charge levied periodically, for example monthly or quarterly, which covers maintenance of the system and use of disc space for storage of data by the user company. The usage fee is calculated by levying a charge for each visitor logged in via the user company.

An automatic generation of a monthly or quarterly bill is achieved as follows :
1. When a user company is registered with the system, the charging module 30 stores the company's details including invoicing address and other details.
2. The charging module 30 stores a note that a set-up fee is to be levied.
3. The charging module 30 monitors the time for which the user company has been registered and uses this time to calculate a maintenance fee.
4. At periodic intervals e.g. quarterly, the charging module 30 accesses the user company's details from the database 12 together with the stored information on the number of visitors that have logged in since the last invoice was generated. This information is combined with the calculated maintenance fee. If a first invoice is being generated, the set-up fee is added and then removed from the user company's record in the charging module 30.
5. The information collected in 4. is used to automatically generate and send out an invoice to the user company. The monitoring process is then repeated.

Other charges can be levied as and when desired, for example charges based on the length of time that data is stored or the overall amount of data of logged out users stored in the database 12. The charge can be based on as many or as few parameters as desired. The charging module monitors each user company separately and generates invoices using the above process for each company registered.

Another advantage of the system for the owner company is that the main operation of the system is carried out by the server 8 which belongs to the owner company and is located on the owner company's site. This is convenient for maintenance and updating purposes. Furthermore, there is no need to provide extensive training to the user company using the interface 1, nor to provide post-sales support other than a help line for problems with the user interface and emergencies. Such problems are minimised by the off-owner-site interface 1 being merely a "front-end" for providing an interface to the server 8.

It can be understood that relatively little effort is required to get the system up and running at the user company using the interface 1. This can be achieved simply by setting up a secure internet connection which allows access to the customer dedicated "front-end" website portal.

It is possible for the server 8 to serve multiple sites of multiple companies. In each case the system is set up as explained in the previous paragraph, and each company is given a user name and password. Data is then stored in a compartmentalised fashion on a company-by-company basis, so that visitor data for each company is separately retrievable.

The system can also be set up within a company to operate using the company intranet rather than the internet. This is particularly advantageous for a company which has a number of sites, since it is useful to monitor visitors to each site separately.

The screen 2 can in practice comprise multiple screens, for example one screen for use by visitors and another screen for administrative use by an employee of the user company.

The message sent to the employee being visited could be another type of message in addition to or instead of an e-mail. For example, a text message could be sent to a mobile communications device used by the employee. One example of such a message is an Short Message Service (SMS) text message to a mobile telephone.

If convenient, the keyboard 4 and associated mouse could be replaced by another input means such as a touch screen. The printer 5 does not have to form part of the user interface 1 but can merely be connected to the interface 1.

The applicant draws attention to the fact that the present invention may include any feature or combination of features disclosed herein either implicitly or explicitly or any generalisation thereof, without limitation to the scope of any of the claims.

## Claims

1. A data management system comprising:
a database;
a user interface located remote from the database, arranged to receive user-input data as a series of items and transfer the items to the database for storage;
connection means over which user-input data can be transferred from the user interface to the database; and
a charging module arranged to generate an invoice identifying a charge for storage of user-input data in the database including a portion based on the usage of the database.

2. A data management system according to claim 1, wherein said portion is calculated based on the number or size of items stored.

3. A data management system according to claim 1 or claim 2, wherein the charge includes another portion based on the time for which user-input data is stored.

4. A data management system according to any preceding claim, wherein the database is arranged to store received user-input data as a series of items such that stored data is retrievable from the database by means other than using the user interface.

5. A data management system according to any preceding claim, wherein each of the items comprises an identity of a user.

6. A data management system according to any preceding claim, wherein each of the items comprises an origin of a user.

7. A data management system according to any preceding claim, wherein the user interface is located in a site having a number of known users and each of the items comprises an identity of a known user.

8. A data management system according to claim 7, wherein each of the items comprises an identity of a visitor visiting the site.

9. A data management system according to claim 8, further comprising notification means, arranged to, upon receipt of an item, send a message to the known user.

10. A data management system according to claim 9, wherein the message comprises at least a part of data forming the item.

11. A data management system according to claim 9 or claim 10, wherein the message is an e-mail.

12. A data management system according to claim 9 or claim 10, wherein the message is a text message to a mobile communications device.

13. A data management system according to any of claims 7 to 12, wherein the database is located remote from the site.

14. A data management system according to any preceding claim, wherein each of the items comprises an indication of the time at which the item was received by the user interface.

15. A data management system according to any preceding claim, wherein each of the items comprises an indication of the date on which the item was received by the user interface.

16. A data management system according to any preceding claim, wherein the user interface is further arranged to receive a user-input notification that an input item is to be removed from the database.

17. A data management system according to claim 16, wherein the user interface is further arranged to transfer the said notification to the database and the database is arranged to, upon receipt of the notification, remove the input item.

18. A data management system according to claim 17, wherein the database is further arranged to transfer the removed input item to a dedicated part of the database for storage.

19. A data management system according to any of claims 16 to 18, wherein the said notification comprises an indication of the time at which the notification is input by a user.

20. A data management system according to any preceding claim, further comprising or connected to a printing means, arranged to, each time an item is received at the user interface, print out at least part of data forming the item.

21. A data management system according to claim 20, wherein the data is printed out on a label.

22. A data management system according to any preceding claim, further comprising a processing unit associated with the database for controlling operation of the database.

23. A data management system according to claim 22, wherein the processing unit is arranged to require a password and/or a user identification to be received at the user interface and transferred over the connection means for verification by the processing unit prior to any items being received at the user interface and transferred to the database.

24. A data management system according to claim 23, wherein the password and/or user identification is required each time the user interface is started up.

25. A data management system according to any preceding claim, wherein the communication means is the internet.

26. A data management system according to any of claims 1 to 24, wherein the communication means is an intranet.

27. A data management system according to any preceding claim, comprising a further one or more user interfaces each associated with a connection means over which data input at the respective interface can be transferred to the database.

28. A data management system according to claim 27, wherein the database is arranged to store data received from each user interface separately from data received from other user interfaces.

29. A data management system according to claim 28, wherein data stored received from a user interface is retrievable separately from other stored data from other user interfaces.

30. A data management system according to claim 29, wherein data stored received from a user interface is retrievable by means of a password allocated to that user interface.

31. A data management system according to any of claims 27 to 30, wherein each user interface is located in a different location.

32. A method of handling data comprising the steps of:
receiving user-input data as a series of items at a first location;
transferring the items for storage at a second location remote from the first location;
generating an invoice identifying a charge for storage of user-input data at the second location, said charge including a portion based on the usage of a storage facility at the second location.

33. A method according to claim 33, wherein the storage facility comprises a database.

34. A computer program product comprising program code means which, when loaded into a computer and executed cause the computer to carry out the steps of claim 32 or 33.
